(19) Europäisches Patentamt
European Patent Office
Office européen des brevets

(11) **EP 3 859 379 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **21151114.2**

(22) Anmeldetag: **12.01.2021**

(51) Internationale Patentklassifikation (IPC):
**G01S 7/481** (2006.01)     **G01S 7/495** (2006.01)
**G01S 17/04** (2020.01)    **G01S 17/08** (2006.01)
**G02B 5/28** (2006.01)     G01S 7/4865 (2020.01)
**G02B 5/20** (2006.01)

(52) Gemeinsame Patentklassifikation (CPC):
**G01S 7/4815; G01S 7/4816;** G01S 7/4817;
G02B 5/28

(54) **OPTOELEKTRONISCHER SENSOR MIT AM BILDFELDWINKEL ANGEPASSTEM EMPFANGSFILTER UND VERFAHREN ZUR ERFASSUNG VON OBJEKTEN**

OPTOELECTRONIC SENSOR WITH RECEIVING FILTER ADAPTED TO ANGLE-OF-VIEW AND METHOD FOR DETECTING OBJECTS

CAPTEUR OPTOÉLECTRONIQUE AVEC FILTRE DE RÉCEPTION ADAPTÉ À L'ANGLE DE VUE ET PROCÉDÉ DE DÉTECTION DES OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2020 DE 102020102247**

(43) Veröffentlichungstag der Anmeldung:
**04.08.2021 Patentblatt 2021/31**

(73) Patentinhaber: **SICK AG**
**79183 Waldkirch (DE)**

(72) Erfinder: **Jägel, Matthias**
**79104 Freiburg (DE)**

(56) Entgegenhaltungen:
**DE-A1-102018 101 846     US-A1- 2006 187 470**
**US-A1- 2017 323 171**

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 11.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Um die Messgenauigkeit solcher Systeme zu erhöhen, werden Maßnahmen zur Rauschunterdrückung ergriffen. Vor allem im Outdoor-Bereich ist mit der Sonne als breitbandiger Quelle mit einer großen Gleichlichtlast auf dem Lichtempfänger und damit verbundenem hohem Rauschen zu rechnen. Derartiges Fremdlicht kann durch Einsatz eines optischen Bandpassfilters ausgefiltert werden, das auf die Wellenlänge des Sendelichts abgestimmt ist und das besonders bei breitbandigem Fremdlicht wie Sonnenlicht für eine deutliche Verbesserung des Signal-Rausch-Verhältnisses sorgt. Je schmalbandiger das Bandpassfilter ausgeführt werden kann, ohne dabei Nutzlicht zu dämpfen, umso größer wird der Vorteil. Solche Bandpassfilter sind bei hoher Güte aus bis zu mehreren hundert Schichten als Interferenzfilter aufgebaut.

Der Durchlassbereich eines solchen Bandpassfilters verändert sich mit dem Einfallswinkel. Dadurch treffen nicht-parallele Strahlbündelanteile effektiv Filterwirkungen mit unterschiedlichem Durchlassbereich an. Passt jedoch die Wellenlänge nicht zum Durchlassbereich, so blockiert das Bandpassfilter auch Nutzlicht. Da es gerade die typische Aufgabe einer Empfangsoptik ist, Licht zu bündeln und somit einen konvergenten und keinen parallelen Strahlengang zu erzeugen, ist der Einfallswinkelbereich regelmäßig relativ groß. Gerade bei kompakten Sensoren wird sogar noch eine besonders kurze Brennweite gefordert. Der Durchlassbereich des Bandpassfilters wird mit einer entsprechenden Toleranz ausgelegt. Das wiederum begrenzt die wirksame Unterscheidung von Nutzlicht und Fremdlicht.

Im Stand der Technik werden daher spezielle optische Komponenten im Strahlengang vorgeschlagen, die das Empfangslicht für das Bandpassfilter parallelisieren. In der US 2017/0289524 A1 sind dafür Blendenöffnungen und Mikrolinsen vorgesehen. Die noch unveröffentlichte deutsche Patentanmeldung mit dem Aktenzeichen 102018118653.3 schlägt dafür ein Zerstreu-Axicon vor. Zusätzliche Bauteile zur Parallelisierung im Strahlengang benötigen jedoch Bauraum, erhöhen die Kosten und tragen als weitere Komponenten zur Vergrößerung der Toleranzkette bei.

Neben dem Einfallswinkelbereich gibt es noch weitere Effekte, die einer trennscharfen Filterwirkung entgegenwirken. Zum einen kommt es in der Praxis zu Driften des Wellenlängenbereichs des Nutzlichts, hauptsächlich durch Temperatureffekte des Lichtsenders. In der noch unveröffentlichten deutschen Patentanmeldung mit dem Aktenzeichen 102018128630.9 sind mehrere Filterflächen eines unterschiedlichen Durchlassbandes vorgesehen. Es werden dann diejenigen aus einer Vielzahl von Empfangselementen weiter ausgewertet, wo die zugeordnete Filterfläche dem Nutzlicht besonders gut entspricht. Ein anderer Effekt ist, dass das Filter durch Einbautoleranzen und dergleichen insgesamt nicht optimal orientiert ist. Die noch unveröffentlichte europäische Patentanmeldung mit dem Aktenzeichen 19158077.8 sieht deshalb eine Verstelleinrichtung vor, um das Filter zu verkippen. In beiden Fällen wird aber der Einfallswinkelbereich nicht verringert, d.h. das Filter muss weiterhin breit genug ausgelegt sein, dass nicht-paralleles Empfangslicht passieren kann.

Die noch unveröffentlichte deutsche Patentanmeldung mit dem Aktenzeichen 102018125826.7 befasst sich mit einem zweilinsigen Objektiv für einen mehrstrahligen Laserscanner. Das Objektiv ist für ein ringförmiges Bildfeld ausgelegt, und durch diese Beschränkung der Anforderungen wird trotz der geringen Linsenanzahl eine hohe Objektivqualität erzielt. Das ringförmige Bildfeld wiederum bedeutet praktisch keine Einschränkung, wenn die Lichtquellen und Empfangselemente eine dazu passende kreisförmige Anordnung bilden. Letzteres ist auch schon in der etwas älteren DE 10 2018 101 846 A1 beschrieben. Es werden aber jeweils keine Filter zur Fremdlichtunterdrückung diskutiert.

Aus der US 2017/0323171 A1 ist eine Anordnung einer Blende und eines Filters bekannt. Das Filter weist einen zentralen Bereich für senkrecht einfallendes Licht und einen ringförmig umlaufenden Bereich für schräg einfallendes Licht auf.

Die US 2006/0187470 A1 offenbart ein optisches metrologisches System zur Vermessung einer Antenne eines Weltraumfahrzeugs. Mittels Strahlteiler wird Empfangslicht zugleich einem entfernungsmessenden System und einem XY-Positionsmesssystem zugeführt. In einer Ausführungsform wird als Empfangsoptik ein Teleskopobjektiv aus zwei Linsen eingesetzt. In einer anderen Ausführungsform ist ein kreisförmiges Array von PDS-Elementen vorgesehen.

Es ist daher Aufgabe der Erfindung, die Messgenauigkeit eines gattungsgemäßen Sensors weiter zu verbessern.

Diese Aufgabe wird durch einen optoelektronischen Sensor und ein Verfahren zur Erfassung von Objekten in einem Überwachungsbereich nach Anspruch 1 beziehungsweise 11 gelöst. Ein Lichtsender erzeugt Sendelicht in einem bestimmten Wellenlängenbereich, und nach Remission an den Objekten wird entsprechendes remittiertes Sendelicht oder Empfangslicht von einem Lichtempfänger in ein Empfangssignal gewandelt. Eine Steuer- und Auswertungseinheit wertet das Empfangssignal aus, um Information über die Objekte zu gewinnen.

Eine Empfangsoptik, die das Empfangslicht auf den Lichtempfänger führt, weist ein auf die Wellenlänge des Sendelichts abgestimmtes Filter zur Fremdlichtunterdrückung auf, um möglichst nur das remittierte Sendelicht passieren zu lassen und Fremdlicht außerhalb von dessen Spektrum auszublenden. Das Filter ist dort im Empfangsstrahlengang angeordnet, wo das einfallende Empfangslicht parallel ist. Mit parallel ist hier keine streng mathematische Anforderung gestellt, sondern ein besonders enger Einfallswinkelbereich beispielsweise von wenigen Grad, höchstens einem Grad oder sogar nur wenigen oder einem Zehntel Grad gemeint.

Die Erfindung geht von dem Grundgedanken aus, durch die Empfangsoptik dafür zu sorgen, dass es den genannten geeigneten Ort für das Filter im Empfangsstrahlengang überhaupt gibt. Wie einleitend erläutert, hat die Empfangsoptik typischerweise die Aufgabe, das Empfangslicht zu bündeln, so dass es gerade nicht parallel ist. Herkömmlich bedarf es daher zusätzlicher optischer Elemente, die eigens einen parallelen Strahlengang am Filter erzeugen.

Erfindungsgemäß ist die Empfangsoptik für ein ringförmiges Bildfeld mit Bildfeldwinkel $\alpha$ optimiert. Das lässt sich auch so ausdrücken, dass die Empfangsoptik auf einen dezentrierten achsfernen Bildfeldpunkt optimiert ist. Das Filter wiederum ist auf diesen Bildfeldwinkel $\alpha$ beziehungsweise den achsfernen Bildfeldpunkt und damit auf einen nichtsenkrechten Einfallswinkel optimiert. Die spezielle Auslegung der Empfangsoptik bietet somit für ein passend ausgelegtes Filter eine besonders geeignete Position mit parallelem oder jedenfalls nahezu parallelem Empfangslicht.

Die Erfindung hat den Vorteil, dass durch das parallele Empfangslicht die Einfallswinkelabhängigkeit des Filters praktisch eliminiert ist. Das Filter kann daher besonders trennscharf Nutzlicht passieren lassen und Fremdlicht blockieren, so dass sich das Signal-Rauschverhältnis deutlich verbessert. Beispielsweise kann ein besonders schmalbandiges optisches Bandpassfilter eingesetzt werden, insbesondere in gängiger Bauform als Interferenzfilter, ohne zusätzliche optische Bauteile oder Bauraum verwenden zu müssen. Das Filter kann ganz speziell für den einzelnen Einfallswinkel optimiert werden, der dem Bildfeldwinkel $\alpha$ entspricht.

Die Empfangsoptik weist bevorzugt eine erste Linse und eine zweite Linse auf, wobei die erste Linse derart ausgebildet ist, dass Lichtbündel eines einzelnen Empfangspunktes mit Bildfeldwinkel $\alpha$ nur eine Hälfte der zweiten Linse treffen. Derartige Lichtbündel, und zwar vorzugsweise sämtliche Lichtbündel mit Bildfeldwinkel a, befinden sich demnach auf Höhe der zweiten Linse nur auf je einer Seite der optischen Achse. Lichtbündel von bezüglich der optischen Achse gegenüberliegenden Feldpunkten überschneiden einander in der Ebene der zweiten Linse nicht. Sie beleuchten den Mittelpunkt der zweiten Linse gerade so nicht mehr. Im Unterschied zu üblichen Objektiven wird hier also kein großer zusammenhängender Bereich an Bildfeldwinkeln genutzt, wie beispielsweise - $\alpha$ ...0°... $\alpha$, sondern nur ein einzelner diskreter Bildfeldwinkel a. Der Bildfeldwinkel a kann eine gewisse Toleranzumgebung einschließen, innerhalb derer diese Eigenschaften immer noch ausreichend erfüllt sind.

Vorzugsweise umfasst die Empfangsoptik nur diese zwei Linsen und keine weiteren Linsen, ist also ein lediglich zweilinsiges Objektiv. Die beiden Linsen sind bevorzugt Sammellinsen. Ein Zweilinser ist einfacher zu produzieren und zu justieren als ein Drei- oder Mehrlinser. Die Designfreiheitsgrade sind dafür an sich beschränkter, werden aber in dieser Ausführungsform so ausgenutzt, dass trotz des geringeren Aufwands die Anforderungen des Sensors weiterhin erfüllt sind. Das gelingt, indem nicht überall scharf begrenzte Strahlen gefordert werden, sondern nur auf einem Kreisring entsprechend dem Bildfeldwinkel a. Das zweilinsige Objektiv ermöglicht sogar anders als mehrlinsige Objektive immer noch eine große Apertur mit k ≤ 2 oder sogar k = 1, also eine kleine Blendenzahl und damit eine große Apertur und eine große Messreichweite.

Vorzugsweise ist für die Empfangsoptik die Ungleichung d ≥ (D1*f1)/(D1+2*f1*tan $\alpha$) erfüllt, mit Brennweite f1 und Durchmesser D1 der ersten Linse und Abstand d zwischen erster Linse und zweiter Linse. Der Abstand d wird hier bevorzugt zwischen der Hauptebene der ersten Linse und der ersten wirksamen Linsenfläche der zweiten Linse gemessen, also der Linsenfläche, die der ersten Linse zugewandt ist. Das ist eine mathematische Formulierung für die bereits vorgestellte Bedingung, dass Lichtbündel mit Bildfeldwinkel $\alpha$ nur eine Hälfte der zweiten Linse treffen.

Es gilt vorzugsweise sogar zumindest annähernd Gleichheit, d.h. d = (D1*f1)/(D1+2*f1*tan $\alpha$). Zumindest annähernd bedeutet, dass noch eine gewisse Toleranz von beispielsweise 5 % oder 10 % möglich ist, die Eigenschaften der Optik verändern sich nicht sprunghaft. Vielmehr geht es darum, noch unter der Bedingung der Ungleichung einen möglichst großen Abstand der zweiten Linse zur Bildebene der Optik einzuhalten, damit die zweite Linse auch noch eine spürbare Wirkung entfalten kann. Dabei ist die Gleichheit ein Optimum in dem Sinne, dass dieser Abstand maximiert ist, und dieses Optimum kann auch nur annähernd mit der genannten Toleranz erreicht werden.

Die Brennweite f2 der zweiten Linse entspricht vorzugsweise dem Abstand zwischen erster Linse und zweiter Linse. Das zweilinsige Objektiv wird dann bildseitig telezentrisch. Der Abstand zwischen erster Linse und zweiter Linse ist an dieser Stelle vorzugsweise nicht der schon eingeführte Abstand d, sondern der um circa die halbe Mittendicke der zweiten Linse abweichende Abstand d' zwischen den Hauptebenen beider Linsen. Das muss aber so nicht zwingend eingehalten werden. Ähnlich wie im Vorabsatz diskutiert, bringt auch bereits eine Brennweite f2 annähernd gleich dem Abstand zwischen erster und zweiter Linse Vorteile mit sich, das zweilinsige Objektiv ist dann zumindest nahezu bildseitig telezentrisch, und zumindest eine Toleranz im Rahmen der halben Mittendicke kann durchaus noch hinnehmbar sein.

Die erste Linse weist bevorzugt eine große Blendenzahl k1 auf, insbesondere k1 = 1. Es ist ein Vorteil eines zweilinsigen Objektivs gegenüber mehrlinsigen Objektiven, dass dies überhaupt möglich ist. Diese Wahl von k1 resultiert auch in einem kleinen Wert k für die Blendenzahl des gesamten Objektivs. Mit einer derart großen Blendenzahl ist ein besonders empfindlicher und langreichweitiger Sensor umsetzbar.

Die Empfangsoptik weist bevorzugt kein zusätzliches optisches Element zum Parallelisieren der auf das Filter auftreffenden Strahlenbündel des remittierten Sendelichts. Ein solches zusätzliches optisches Element ist erfindungsgemäß nicht erforderlich, und daher können Kosten und Bauraum eingespart werden. Die erfindungsgemäße Empfangsoptik leistet die Parallelisierung des Strahlengangs bereits mit ihrer Hauptaufgabe der Strahlführung auf den Lichtempfänger dank der Optimierung auf ein ringförmiges Bildfeld.

Das Filter ist bevorzugt vor den übrigen Elementen der Empfangsoptik angeordnet. Diese Anordnung bezieht sich auf eine Perspektive des einfallenden Empfangslichts, das erst auf das Filter, dann auf die eigentliche Empfangsoptik und deren Linsen und schließlich auf den Lichtempfänger trifft. Herkömmlich würde dagegen das Empfangslicht zunächst vor dem Filter mit einem Teil der Empfangsoptik parallelisiert.

Das Filter weist bevorzugt einen schmalen Durchlassbereich nur für den einen dem Bildfeldwinkel $\alpha$ entsprechenden nicht senkrechten Einfallswinkel auf. Das Filter ist somit nur für diesen einen Einfallswinkel ausgelegt. Das optische Filter ist bevorzugt ein Bandpassfilter. Es schneidet also das Fremdlicht sowohl bei kleinen als auch bei großen Wellenlängen ab. Ein herkömmlicher breiterer Durchlassbereich für einen größeren Einfallswinkelbereich ist nicht erforderlich. Das optische Filter weist bevorzugt einen Durchlassbereich mit einer Halbwertsbreite von höchstens 40 nm, höchstens 30 nm, höchstens 20 nm oder höchstens 10 nm auf. Das sind einige Werte für einen nach herkömmlichem Maßstab mit Reserve für einen größeren Einfallswinkelbereich zu schmalen Durchlassbereich.

Der Lichtsender ist bevorzugt zum Aussenden mehrerer voneinander separierter Lichtstrahlen ausgehend von jeweils einem Sendepunkt und der Lichtempfänger zum Erzeugen jeweiliger Empfangssignale aus den jeweils in einem Empfangspunkt auftreffenden remittierten Lichtstrahlen ausgebildet. Der Sensor wird damit zu einem mehrstrahligen Sensor oder Mehrfachtaster, der mehrere Messpunkte antastet. In bevorzugter Weiterbildung als Laserscanner entsteht ein Mehrebenenscanner. Die mehreren Messstrahlen teilen sich vorzugsweise dieselbe Empfangsoptik und dasselbe Filter. Die erfindungsgemäße Objektivauslegung ermöglich auch für mehrere Messstrahlen die Anordnung des Filters dort im Strahlengang, wo das Empfangslicht parallel ist, und daher eine besonders wirksame Fremdlichtunterdrückung.

Jeder Sendepunkt ist effektiv ein Lichtsender, von dem der jeweilige ausgesandte Lichtstrahl ausgeht, wobei aber zunächst nicht zwingend erforderlich ist, dass an den Sendepunkten physische Lichtsender sitzen. Stattdessen kann auch ein physischer Lichtsender beispielsweise durch Strahlteilung mehrere ausgesandte Lichtstrahlen an mehreren oder allen Sendepunkten erzeugen. Die ausgesandten Lichtstrahlen sind weiterhin nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Ähnlich den Ausführungen zu den Sendepunkten sind die Empfangspunkte effektiv Lichtempfänger, ohne dass physisch an jedem Empfangspunkt ein Lichtempfänger sitzen muss. Dennoch sind bevorzugt jeweilige Lichtempfänger vorgesehen, oder der Lichtempfänger weist eine Pixelmatrix auf, und nur das oder die Pixel an den Empfangspunkten werden genutzt, um ein Empfangssignal zu gewinnen. Möglicherweise erzeugen weitere Pixel auch Signale, die aber ignoriert oder nicht ausgelesen werden.

Die Sendepunkte und/oder die Empfangspunkte sind bevorzugt auf einer Kreislinie angeordnet. Die Kreislinien oder Kreisringe entsprechen dem Bildfeldwinkel a, auf den die Empfangsoptik ausgelegt ist. Bei dieser zueinander passenden Anordnung von Sendebeziehungsweise Empfangspunkten und Empfangsoptik werden gerade dessen optimierten Eigenschaften genutzt, während dafür womöglich in Kauf genommene Designeinbußen für andere Bildfeldwinkel gar keine praktische Auswirkung mehr haben. Eine Kreisanordnung von Sende- beziehungsweise Empfangspunkten erscheint insbesondere für einen Laserscanner auf den ersten Blick widersinnig, da dort eine eindimensionale Anordnung auf einer einfachen Linie genügen würde, mit der dann durch die Drehbewegung eine Ebenenschar abgetastet wird. Die Linie ließe sich aber im Gegensatz zu einem Kreisring nicht mit der erfindungsgemäß hohen Qualität über den geforderten großen Bildbereich durch ein zweilinsiges Objektiv abbilden. Außerdem gäbe es dann nicht die Möglichkeit, das Filter insbesondere für mehrere Abtaststrahlen an einer Position anzuordnen, wo das Empfangslicht parallel ist.

Auch mit zu einer Kreislinie angeordneten Sende- beziehungsweise Empfangspunkten ist es möglich, in einem Laserscanner äquidistant angeordnete Ebenen abzutasten, da der Versatz in Rotationsrichtung des Laserscanners nur einen erforderlichenfalls auch kompensierbaren Zeitversatz der Messung bewirkt.

Die Kreislinie ist bevorzugt um die optische Achse zentriert. Dann erfahren bei rotationssymmetrischen Eigenschaften der Empfangsoptik die Lichtstrahlen jeweils die gleichen Strahlformungs- und Ablenkungseffekte. Lichtsender und Lichtempfänger können eine koaxiale Anordnung bilden, in der die Empfangsoptik zugleich als Sendeoptik fungiert. Das ergibt einen besonders kompakten Aufbau.

Der Sensor ist bevorzugt als Laserscanner ausgebildet und weist eine bewegliche Ablenkeinheit auf, mit deren Hilfe das Sendelicht durch den Überwachungsbereich geführt wird. Mit einem Sendelichtstrahl tastet der Laserscanner mit der Bewegung der beweglichen Ablenkeinheit den Überwachungsbereich in einer, bei mehreren Sendelichtstrahlen in mehreren Ebenen ab. Die Ablenkeinheit ist vorzugsweise in Form einer drehbaren Abtasteinheit ausgebildet, die praktisch einen beweglichen Messkopf bildet, in dem Lichtsender und/oder Lichtempfänger und vorzugsweise auch zumindest Teile der Steuer- und Auswertungseinheit untergebracht sind.

Die Auswertungseinheit ist bevorzugt dafür ausgebildet, aus einer Lichtlaufzeit zwischen Aussenden des Sendelichts und Empfangen des remittierten Sendelichts einen Abstand der Objekte zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1       eine schematische Schnittdarstellung eines Laserscanners;

Fig. 2a     eine schematische Ansicht einer kreisförmigen Anordnung von Bildfeldpunkten;

Fig. 2b     eine schematische Ansicht einer linearen Anordnung von Bildfeldpunkten;

Fig. 2c     eine schematische Ansicht einer kreisringförmigen Anordnung von Bildfeldpunkten;

Fig. 3       eine Draufsicht auf kreisförmig angeordnete Sende- beziehungsweise Empfangspunkte;

Fig. 4       eine schematische Ansicht eines zweilinsigen Objektivs für ein kreisringförmiges Bildfeld mit beispielhaften Strahlenverläufen;

Fig. 5       eine schematische Draufsicht auf die zweite Linse des Objektivs gemäß Figur 4 zur Veranschaulichung der optischen Wirkung der ersten Linse; und

Fig. 6       den Empfangsstrahlengang an einer Ausführungsform einer Empfangsoptik mit Filter.

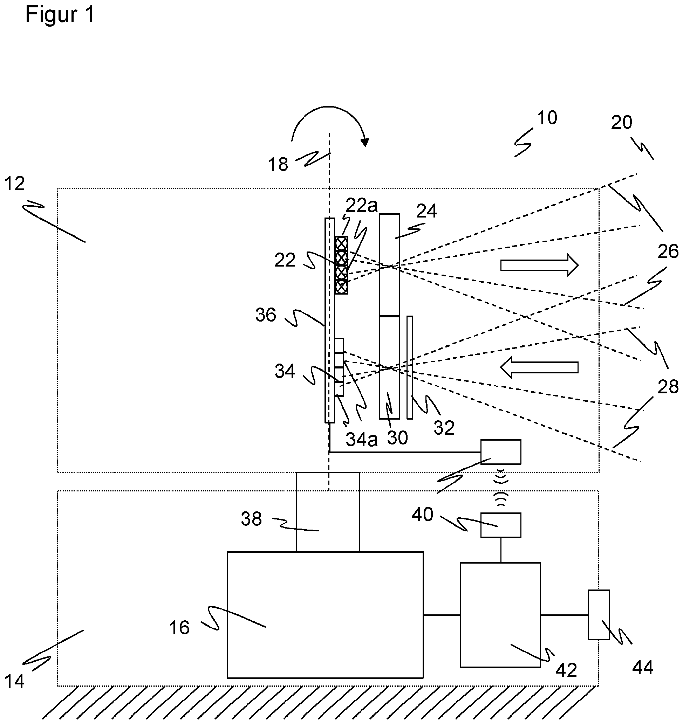

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit mehreren Lichtquellen 22a, beispielsweise LEDs oder Laser in Form von Kantenemittern oder VCSELs, mit Hilfe einer nur rein schematisch gezeigten Sendeoptik 24 mehrere Sendelichtstrahlen 26 mit gegenseitigem Winkelversatz, die in den Überwachungsbereich 20 ausgesandt werden. Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer ebenfalls rein schematisch gezeigten Empfangsoptik 30 mit vorgeordnetem Filter 32 zur Fremdlichtunterdrückung auf einen Lichtempfänger 34 mit mehreren Lichtempfangselementen 34a geführt, die jeweils ein elektrisches Empfangssignal erzeugen. Die Lichtempfangselemente 34a können separate Bauteile oder Pixel einer integrierten Matrixanordnung sein, beispielsweise Photodioden, APDs (Avalanche Diode) oder SPADs (Single-Photon Avalanche Diode).

Der Lichtsender 22 erzeugt Sendelichtstrahlen 26 in einem bestimmten Wellenlängenbereich, auf den das Filter 32 abgestimmt ist. Mit geeigneten Lichtquellen, insbesondere Lasern, ist ein sehr eng begrenzter Wellenlängenbereich der Sendelichtstrahlen 26 möglich. Die verwendeten Lichtwellenlängen liegen typischerweise zwischen 200 nm und 2000 nm, insbesondere bei 660 nm, 850 nm, 900 nm und 1550 nm. Durch das Filter 32 wird Fremdlicht außerhalb des durch den Wellenlängenbereich definierten Nutzlichtbandes blockiert.

Die rein beispielhaft vier Lichtquellen 22a und Lichtempfangselemente 34a sind in der Schnittansicht übereinander dargestellt. Tatsächlich ist zumindest eine der Gruppen in bevorzugten Ausführungsformen der Erfindung in einer Kreisfigur beziehungsweise auf einer Kreislinie angeordnet, wie dies weiter unten noch erläutert wird. Das muss sich aber nicht auf physische Lichtquellen 22a und Lichtempfangselemente 34a beziehen, sondern nur auf die hier allerdings damit übereinstimmenden effektiven Sendepunkte als Ausgangspunkte der Sendelichtstrahlen 26 und Empfangspunkte als Endpunkte der remittierten Lichtstrahlen 28. Es ist abweichend von Figur 1 denkbar, mit einer physischen Lichtquelle mehrere Sendepunkte zu erzeugen beziehungsweise mehrere Empfangspunkt auf demselben physischen Empfangsbaustein unterzubringen. Im Übrigen müssen auch nicht zwingend mehrere Sendelichtstrahlen 26 erzeugt und mehrere remittiere Lichtstrahlen 28 empfangen werden, sondern es ist auch ein einstrahliges System denkbar.

Lichtsender 22 und Lichtempfänger 34 sind in der in Figur 1 gezeigten Ausführungsform gemeinsam auf einer Leiterkarte 36 angeordnet, die auf der Drehachse 18 liegt und mit der Welle 38 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 34 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 40 verbindet die bewegliche Abtasteinheit 12 mit der ruhenden Sockeleinheit 14. Dort befindet sich eine Steuer- und Auswertungseinheit 42, die zumindest teilweise auch auf der Leiterkarte 36 oder an anderem Ort in der Abtasteinheit 12 untergebracht sein kann. Die Steuer- und Auswertungseinheit 42 steuert den Lichtsender 22 und erhält die Empfangssignale des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 28 und dessen Erfassung in einem der Lichtempfangselemente 34a ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 44 ausgegeben werden. Die Sensorschnittstelle 44 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Insbesondere kann dann die Sensorschnittstelle 44 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Dabei kann nicht nur ein Sende-Empfangsmodul mitrotieren wie hier dargestellt, es sind weitere derartige Module mit Höhenversatz oder einem Winkelversatz bezüglich der Drehachse 18 vorstellbar. Alternativ ist auch eine periodische Ablenkung mittels Drehspiegel oder einem Facettenspiegelrad denkbar. Bei mehreren Sendelichtstrahlen 26 ist dabei zu beachten, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist auch ein Mehrfachtaster ohne periodische Bewegung möglich, der dann praktisch nur aus der ruhenden Abtasteinheit 12 mit entsprechender Elektronik, jedoch ohne Sockeleinheit 14 besteht, insbesondere als Variante eines Flash-LiDARs.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Kegelmantelflächen werden hier manchmal vereinfachend als Abtastebenen bezeichnet.

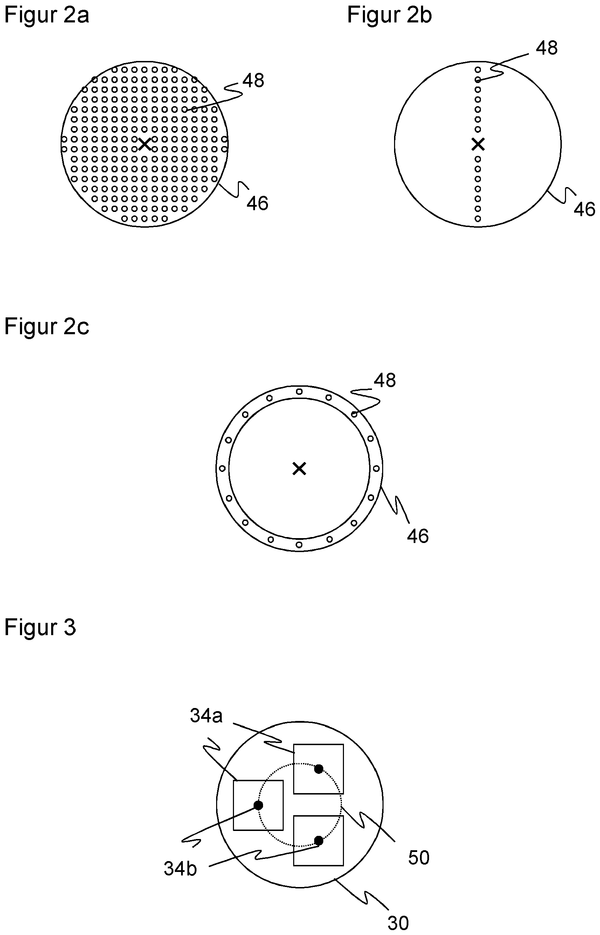

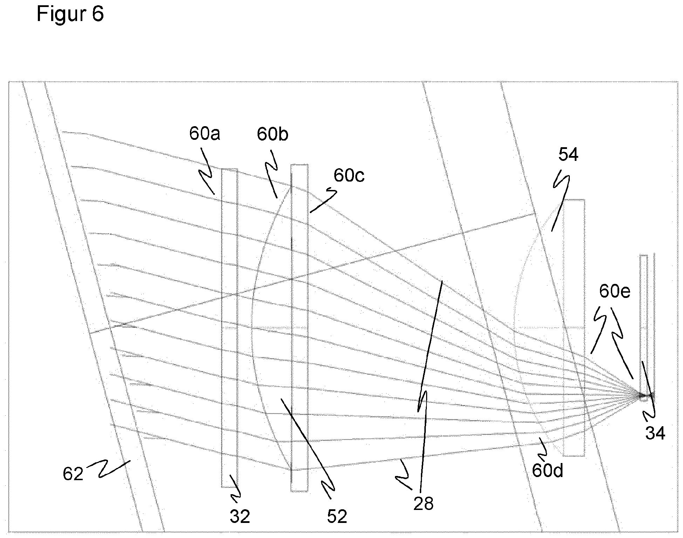

Die in Figur 1 nur als Funktionsblock gezeigte Empfangsoptik 30 ist erfindungsgemäß für ein ringförmiges Bildfeld mit Bildfeldwinkel $\alpha$ ausgelegt. Dies soll nun unter Bezugnahme auf die Figuren 2 bis 5 näher erläutert werden. Die Figuren 2a-c illustrieren zunächst eine Motivation dieser besonderen Optikauslegung. Eine weitere Motivation besteht darin, dass hierdurch eine besonders günstige Position für das Filter 32 geschaffen wird, worauf später unter Bezugnahme auf die Figur 6 vertieft eingegangen wird.

Im Idealfall sollte die Empfangsoptik 30 wie in Figur 2a innerhalb des Bildkreises 46 sämtliche Bildfeldpositionen 48 scharf abbilden. Das leistet jedoch eine Einzellinse nur für einen sehr kleinen Bildkreis 46, während ein entsprechendes Objektiv zu aufwändig wäre und zudem andere optische Einschränkungen mit sich brächte.

Für einen Laserscanner ist nicht unbedingt eine flächenhafte Abbildung erforderlich, da Abtastebenen mit gegenseitigem Versatz in Elevation bereits durch eine lineare Anordnung von Lichtquellen 22a und Lichtempfangselementen 34a entstehen. Dafür würde eine Optik genügen, die auf einer linearen Anordnung von Bildfeldpositionen 48 wie in Figur 2b für eine scharfe Abbildung sorgt. Auch das ist aber für größere Bildkreise 46 nur mit einem aufwändigen Objektiv möglich.

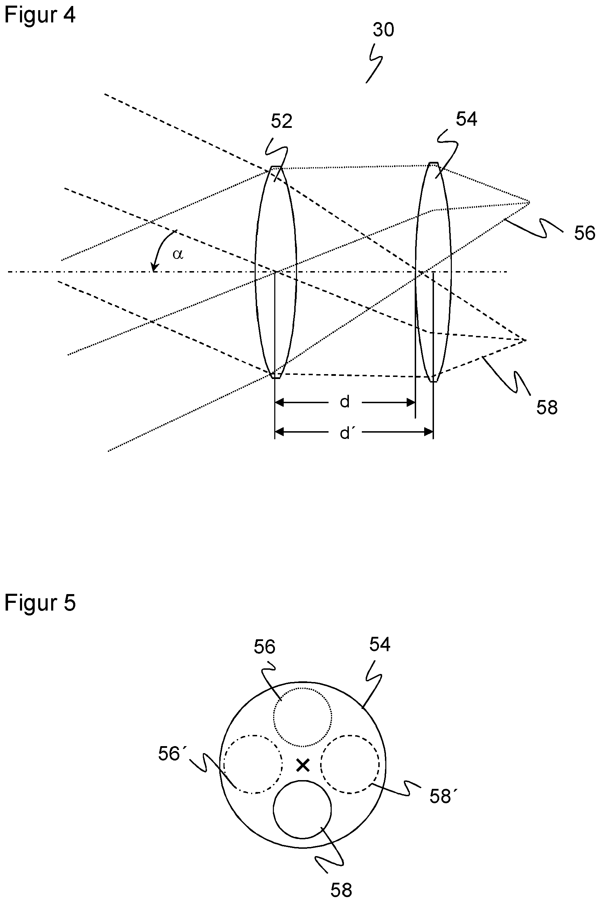

Stattdessen wird erfindungsgemäß die scharfe Abbildung nur für einen einzigen Bildfeldwinkel $\alpha$ gefordert, wie dies in Figur 2c dargestellt ist, wo der Ring der Bildfeldpositionen 48 dem Bildfeldwinkel $\alpha$ entspricht. Das Optikdesign wird vorzugsweise an dem festen Bildfeldwinkel $\alpha$ ausgerichtet, was nicht ausschließt, dass die Abbildung auch in einer gewissen Umgebung noch scharf ist, für abweichende und insbesondere kleinere Bildfeldwinkel ist dies aber keine Designanforderung mehr. Der Bildfeldwinkel $\alpha$ mit einem gewissen Toleranzband einer ausreichend scharfen Abbildung ist in Figur 2c möglichst groß, beispielsweise $\alpha=\pm 15°$, um möglichst große Abstände zwischen den Strahlen 26, 28 des Sensors 10 zu erhalten. Bereits mit einer Einzellinse lässt sich durch diese Beschränkung auf ein kreisringförmiges Bildfeld eine gewisse Verbesserung des abgedeckten Winkels beispielsweise bis auf $\pm 8°$ erreichen. Das wird mit der später anhand der Figuren 4 und 5 erläuterten zweilinsigen Auslegung der Empfangsoptik 30 aber noch deutlich weiter verbessert.

Figur 3 zeigt in einer Draufsicht eine bevorzugte Anordnung Lichtempfangselemente 34a auf einer Kreislinie 50. Vorzugsweise durchstößt wie dargestellt die optische Mittelachse der Empfangsoptik 30 den Mittelpunkt der Kreislinie 50. Die Figur 3 könnte analog auch für den Sendepfad dargestellt werden, an die Sendeoptik 24 sind ähnliche Anforderungen gestellt. Im Sendepfad ist jedoch vorzugsweise kein Filter 32 vorgesehen, da der Lichtsender 22 bereits selbst in der Lage ist, Sendelichtstrahlen 26 in einem engen Wellenlängenband zu erzeugen.

Aufgrund der Anordnung auf der Kreislinie 50 wird von der Empfangsoptik 30 effektiv nur das kreisringförmige Bildfeld entsprechend dem Bildfeldwinkel $\alpha$ verwendet. Deshalb ist diese Anordnung besonders vorteilhaft, es werden genau die optimierten Bereiche der Empfangsoptik 30 ausgenutzt. Abbildungsfehler der Empfangsoptik 30 für von $\alpha$ abweichende Bildfeldwinkel sind praktisch nicht relevant.

Mehrere Empfangspunkte 34b können durch separate Lichtempfangselemente 34a oder durch Pixel oder Pixelbereiche einer integrierten Mehrfachanordnung von Lichtempfangselementen 34a erreicht werden. Figur 3 zeigt ein Beispiel mit drei Empfangspunkten 34b, die gleichmäßig über die Kreislinie 50 verteilt sind. Abweichende Anzahlen auch in unregelmäßiger Anordnung sind vorstellbar.

Figur 4 zeigt eine schematische Darstellung eines beispielhaften nur zweilinsigen Objektivs der Empfangsoptik 30 mit einer ersten Linse 52 und einer zweiten Linse 54, wobei beide Linsen 52, 54 vorzugsweise Sammellinsen sind. Ein entsprechendes Objektiv kann auch als Sendeoptik 24 beziehungsweise bei koaxialer Anordnung als gemeinsame Sende-Empfangsoptik eingesetzt werden. Oben zu Figur 2 wurde erläutert, dass mit einer auf ein kreisringförmiges Bildfeld optimierten Einzellinse Bildfeldwinkel von bis zu $\pm 8°$ möglich sind. Das zweilinsige Objektiv verbessert dies erheblich auf $\pm 20°$ und mehr.

In Figur 4 sind zwei beispielhafte, bezüglich der optischen Achse einander gegenüberliegende Lichtbündel 56, 58 eingezeichnet, die dem Bildfeldwinkel $\alpha$ entsprechen. Auf diesen Bildfeldwinkel $\alpha$ und das dadurch bestimmte kreisringförmige Bildfeld ist das zweilinsige Objektiv optimiert.

Die erste Linse 52 verringert den Strahldurchmesser der Lichtbündel 56, 58 auf einen Querschnitt, der maximal noch halb so groß ist wie beim Eintritt in die erste Linse 52. Dieser verkleinerte Querschnitt trifft dann nur noch eine Hälfte der zweiten Linse 54. Dadurch wird die zweite Linse 54 an einer gegebenen Stelle immer nur von Licht aus einem Feldpunkt beleuchtet, nicht aber von dem bezüglich der optischen Achse gegenüberliegenden Feldpunkt.

Figur 5 illustriert diese optischen Eigenschaften des zweilinsigen Objektivs noch einmal in einer Draufsicht auf die zweite Linse 54. Lichtbündel 56, 58 und 56', 58' von gegenüberliegenden Feldpunkten überschneiden sich nicht und erreichen nicht die jeweils bezüglich der optischen Achse andere Hälfte der zweiten Linse 54. Seitlich benachbarte Feldpunkte dürfen auch zu einem gewissen Überlapp führen. Der Mittelpunkt der zweiten Linse 54 bleibt unbeleuchtet.

Diese qualitativ erläuterten Eigenschaften können auch genauer anhand von Parametern des zweilinsigen Objektivs angegeben werden. Gesucht ist derjenige Abstand d zwischen der Hauptebene der ersten Linse 52 und der ersten optisch aktiven Fläche der zweiten Linse 54, bei dem alle Strahlen eines Lichtbündels 56, 58 zu einem Feldpunkt vollständig auf einer Seite bezüglich der optischen Achse angekommen sind.

Der Hauptstrahl des Lichtbündels 56, 58 durch die Mitte der ersten Linse 52 hat bei variabel gedachtem d einen Seitenversatz von $\tan \alpha * d$, und der relevante Randstrahl hat noch einen zusätzlichen Seitenversatz von $(D1/2)/f1 * d$, wobei D1 der genutzte Durchmesser und f1 die Brennweite der ersten Linse 52 sind. Insgesamt soll der Seitenversatz den Randstrahl über die optische Achse hinausbringen. Dafür ist ein Seitenversatz von D1/2 nötig. Also muss folgende Ungleichung erfüllt werden:

$$[(D1/2)/f1 + \tan \alpha] * d \geq D1/2,$$

und das lässt sich umformen zu

$$d \geq (D1*f1)/(D1+2*f1*\tan \alpha).$$

Dabei ist es vorteilhaft, für d einen Zahlenwert zumindest in der Nähe der Gleichheit zu wählen. Je größer der verbleibende Unterschied in der Ungleichung, desto eher kommt die zweite Linse 54 in unmittelbare Nähe zur Bildebene, und dort kann sie kaum noch eine nützliche Wirkung entfalten.

Die beiden Linsen 52, 54 können plan-konvex, konvex-plan, bi-konvex und womöglich auch konvex-konkav oder konkav-konvex ausgeführt sein, in den beiden letzten Fällen jedoch weiterhin als Sammellinse. Es sind klassische brechende Linsen, Fresnel-Linsen oder als beugende beziehungsweise diffraktive Optiken sowie Kombinationen davon möglich. Die beiden Linsen 52, 54 können voneinander in diesen allgemeinen Formgebungseigenschaften und Wirkprinzipen abweichen oder darin übereinstimmen. Die beiden Linsen 52, 54 können unterschiedliche Brennweiten f1, f2, unterschiedliche Durchmesser D1, D2 und unterschiedliche Formen aufweisen.

In einer vorteilhaften Ausführungsform wird nicht nur der Abstand zwischen den beiden Linsen 52, 54 anhand der oben angegebenen Ungleichung gewählt, sondern auch noch die Wahl f2=d' getroffen. Dabei ist d' der Abstand zwischen den Hauptebenen der Linsen 52, 54, der etwas größer ist als der Abstand d, je nach Mittendicke der zweiten Linse 54.

Mit dieser Brennweite f2 wird die vordere Brennebene der zweiten Linse 54 in die Hauptebene der ersten Linse 52 gelegt. Das hat zur Folge, dass der Hauptstrahl in der Bildebene des Objektives parallel zur optischen Achse läuft, das Objektiv ist dann also bildseitig telezentrisch. Das ermöglicht unter anderem beim Einsatz auch als Sendeoptik 24, dass die Lichtquellen 22a parallel zueinander ausgerichtet sein dürfen und nicht schräg gestellt werden müssen. Bereits bei einer nicht exakten Anpassung der Brennweite f2 an den Abstand d', also nur f2~d' ergeben sich schon Vorteile, weil der bildseitige Hauptstrahlwinkel dann bereits deutlich verkleinert wird, wenn auch nicht bis auf 0°.

Weiter wird bevorzugt der Durchmesser D2 der zweiten Linse 54 nur so groß gewählt, wie es die durchlaufenden Lichtbündel 56, 58 benötigen. Dann ist das zweilinsige Objektiv durch nur drei Parameter vollständig bestimmt: Der Durchmesser D1 und Brennweite f1 der ersten Linse 52 können frei gewählt werden. Der Abstand d der zweiten Linse 54 ergibt sich aus der oben erläuterten Ungleichung. Die Brennweite f2 schließlich wird auf den Abstand d' gesetzt.

Mit an sich bekannten Formeln der geometrischen (paraxialen) Optik lässt sich auch eine Gesamtbrennweite f des Objektives aus diesen nun bekannten Größen berechnen. Umgekehrt kann das zweilinsige Objektiv nur durch seine paraxialen Grundgrößen festgelegt werden: Die Brennweite f des Objektivs, die Apertur D = D1 des Objektivs und den Feldwinkel $\alpha$ des kreisförmigen Bildfeldes.

In einer weiteren bevorzugten Ausführungsform mit einer sehr großen, aber noch realisierbaren Blendenzahl k1 := D1/f1 = 1 der ersten Linse vereinfachen sich die Zusammenhänge auf recht anschauliche Weise:

$$d = f1/(1+2 \tan \alpha), \text{ etwa mit } \alpha = 30°: d \approx 0.5*f1,$$

$$f2 = d´ \approx d \approx f1/(1+2 \tan \alpha).$$

Hiermit sind für diese bevorzugte Ausführungsform für jeden gewünschten Feldwinkel $\alpha$ und jede gewünschte Apertur D =D1 alle Brennweiten f1, f2 und Abstände d beziehungsweise d' für das Design des zweilinsigen Objektivs angegeben. Erneut mit den an sich bekannten Formeln für die Berechnung der Gesamtbrennweite zweier kombinierter Linsen können alle diese Werte bei Bedarf auch direkt aus den gewünschten Werten f und D des Objektivs erhalten werden.

Der Vollständigkeit halber wird noch ein Zahlenbeispiel angeführt:

| | |
|---|---|
| Objektiv-Brennweite | f=19mm |
| Apertur | D = 20mm (Durchmesser der Linse 1) → k = D/f = 1.05) |
| erste Linse | F2-Glas: f1=29.8mm, Mittendicke 4mm, asphärisch konvex-plan |
| zweite Linse | F2-Glas: f2=21.6mm, Mittendicke 5mm, sphärisch konvex-plan |
| Abstand Linsen | d=14.8mm; Abstand zweite Linse zur Bildebene: 4.2mm |
| Bildfeldwinkel | a= $\pm$15.4° |

(fortgesetzt)

| Objektiv-Brennweite | f=19mm |
|---|---|
| Spotdurchmesser | 20um (=ca. 1mrad) |

Figur 6 zeigt einen beispielhaften Strahlenverlauf des remittierten Sendelichtstrahls 28 im Empfangspfad einer Empfangsoptik 30, die als Objektiv mit zwei Linsen 52, 54 nach den soeben vorgestellten Grundsätzen ausgestaltet ist. Wie einleitend schon diskutiert, verschiebt sich der Durchlassbereich des Filters 32 mit dem Einfallswinkel. Trifft nichtparalleles Licht auf das Filter 32, so ergeben sich verschiedene Einfallswinkel, und dementsprechend ist der Durchlassbereich mit einer Toleranz auszulegen, die den Einfallswinkelbereich umfasst. Dadurch wiederum gelangt auch mehr Fremdlicht auf den Lichtempfänger 34.

Um mit einem möglichst schmalen Durchlassbereich auszukommen, sollte daher das Filter 32 an einer Position im Strahlengang angeordnet werden, die nur einen möglichst kleinen Einfallswinkelbereich aufweist, wo also die Strahlenbündel des remittierten Sendelichtstrahls 28 möglichst parallel zueinander verlaufen. Im Allgemeinen gibt es dafür in einer Empfangsoptik keine optimale Position, herkömmlich werden deshalb eigens zusätzliche optische Elemente zum Parallelisieren des auf das Filter auftreffenden Lichts verwendet.

In Figur 6 sind Positionen 60a-e an verschiedenen optischen Flächen in dem auf einen achsfernen Feldpunkt entsprechend dem Bildfeldwinkel $\alpha$ optimierten zweilinsigen Objektiv mit den beiden Linsen 52, 54 markiert. Das Filter 32 ist innerhalb einer Frontscheibe 62 des Sensors 10 vor der ersten Linse 52 bei der Position 60 angeordnet, wo der Einfallswinkelbereich nur 0,1° umfasst. Der remittierte Sendelichtstrahl 28 ist hier also fast perfekt parallel. An anderen Positionen 60b-e wäre der Einfallswinkelbereich wesentlich größer und beträgt 43,8° an der Position 60b der gekrümmten Eintrittsfläche der ersten Linse 52, dann 34,4° an der Position 60c der planen Rückseite der ersten Linse 52, sowie 14,4° an der gekrümmten Eintrittsfläche der zweiten Linse 54 und 21,2° an der planen Rückseite der zweiten Linse 54.

Durch die besondere Auslegung der Empfangsoptik 30 auf ein ringförmiges Bildfeld, die wiederum besonders geeignet für eine kreisförmige Anordnung der Empfangspunkte 34b geeignet ist, wird demnach ohne zusätzliche optische Elemente eine Position mit nahezu optimal parallelisiertem remittiertem Sendelichtstrahl 28 geschaffen, dessen Strahlenbündel praktisch im gleichen Winkel auf das Filter 32 auftreffen. Das gilt jedenfalls für Objekte ab in einer gewissen Entfernung, und diese sind in der Regel energetisch am kritischsten. Für nähere Objekte würde also ein gewisser Verlust an Nutzlicht durch einen breiteren Einfallswinkelbereich an einem dafür zu eng abgestimmten Filter 32 nicht zu Messproblemen führen.

Das Filter 32 kann folglich an der Position 60a angeordnet und als Interferenzfilter sehr schmalbandig ausgelegt beziehungsweise nur auf den einen Einfallswinkel gerechnet werden. Die verbleibende Divergenz der einzelnen Strahlenbündel kann je nach maximalem Abstand und Apertur im Rahmen aller Toleranzen nahezu vernachlässigt werden. Die Frontscheibe 62 selbst ist vorzugsweise als Kunststoffhaube ausgebildet und eignet sich daher nicht als Substrat für einen Bandpassfilter. Prinzipiell wäre aber denkbar, das Filter 32 direkt an der Frontscheibe 62 anzubringen beziehungsweise dort beispielsweise durch entsprechende Beschichtung zu integrieren.

**Patentansprüche**

1. Optoelektronischer Sensor (10) zur Erfassung von Objekten in einem Überwachungsbereich (20), der einen Lichtsender (22) zum Aussenden von Sendelicht (26) eines Wellenlängenbereichs, einen Lichtempfänger (34) zum Erzeugen eines Empfangssignals aus dem an den Objekten remittierten Sendelicht (28), eine dem Lichtempfänger (34) vorgeordnete Empfangsoptik (30), die auf ein ringförmiges Bildfeld mit Bildfeldwinkel $\alpha$ optimiert ist, sowie eine Steuer- und Auswertungseinheit (42) aufweist, die dafür ausgebildet ist, aus dem Empfangssignal Informationen über die Objekte zu erfassen,
**dadurch gekennzeichnet,**
**dass** der Sensor (10) ein auf den Wellenlängenbereich abgestimmtes optisches Filter (32) zur Unterdrückung von Fremdlicht aufweist, das dort (60a) im Empfangsstrahlengang angeordnet ist, wo das remittierte Sendelicht (28) parallele Strahlenbündel bildet, dass das Filter (32) einen schmalen Durchlassbereich nur für einen dem Bildfeldwinkel $\alpha$ entsprechenden nicht senkrechten Einfallswinkel des remittierten Sendelichts (28) aufweist und dass das Filter (32) vor den übrigen Elementen der Empfangsoptik (30) angeordnet ist.

2. Sensor (10) nach Anspruch 1,
wobei die Empfangsoptik (30) eine erste Linse (52) und eine zweite Linse (54) aufweist, wobei die erste Linse (52) derart ausgebildet ist, dass jeweilige Lichtbündel eines einzelnen Empfangspunktes (34b) des Lichtempfängers (34) mit Bildfeldwinkel $\alpha$ jeweils nur eine Hälfte der zweiten Linse (54) treffen.

**3.** Sensor (10) nach Anspruch 2,
wobei für die Empfangsoptik (30) die Ungleichung d ≥ (D1*f1)/(D1+2*f1*tan α) erfüllt ist, mit Brennweite f1 und Durchmesser D1 der ersten Linse (52) und Abstand d zwischen erster Linse (52) und zweiter Linse (54).

**4.** Sensor nach Anspruch 3,
wobei zumindest annähernd d = (D1*f1)/(D1+2*f1*tan α) gilt.

**5.** Sensor (10) nach einem der vorhergehenden Ansprüche,
wobei die Empfangsoptik (30) kein zusätzliches optisches Element zum Parallelisieren der auf das Filter (32) auftreffenden Strahlenbündel des remittierten Sendelichts (28) aufweist.

**6.** Sensor (10) nach einem der vorhergehenden Ansprüche,
wobei der Lichtsender (22) zum Aussenden mehrerer voneinander separierter Lichtstrahlen ausgehend von jeweils einem Sendepunkt und der Lichtempfänger (34) zum Erzeugen jeweiliger Empfangssignale aus den jeweils in einem Empfangspunkt (34b) auftreffenden remittierten Lichtstrahlen ausgebildet ist.

**7.** Sensor (10) nach Anspruch 6,
wobei die Sendepunkte und/oder die Empfangspunkte (34b) auf einer Kreislinie (50) angeordnet sind.

**8.** Sensor (10) nach einem der vorhergehenden Ansprüche,
der als Laserscanner ausgebildet ist und eine bewegliche Ablenkeinheit (12) aufweist, mit deren Hilfe das Sendelicht (26) periodisch durch den Überwachungsbereich (20) geführt wird.

**9.** Sensor nach Anspruch 8,
wobei die Ablenkeinheit (12) in Form einer drehbaren Abtasteinheit ausgebildet ist, in welcher der Lichtsender (22) und/oder der Lichtempfänger (34) untergebracht ist.

**10.** Sensor (10) nach einem der vorhergehenden Ansprüche,
wobei die Auswertungseinheit (42) dafür ausgebildet ist, aus einer Lichtlaufzeit zwischen Aussenden des Sendelichts (26) und Empfangen der remittierten Sendelichts (28) einen Abstand der Objekte zu bestimmen.

**11.** Verfahren zur Erfassung von Objekten in einem Überwachungsbereich (20), bei dem Sendelicht (26) eines Wellenlängenbereichs ausgesandt, aus dem an den Objekten remittierten Sendelicht (26) ein Empfangssignal erzeugt und das Empfangssignal ausgewertet wird, um Informationen über die Objekte zu erfassen, wobei das remittierte Sendelicht (28) durch eine Empfangsoptik (30) geführt wird, die für ein ringförmiges Bildfeld mit Bildfeldwinkel α optimiert ist,
**dadurch gekennzeichnet,**
**dass** das remittierte Sendelicht (28) durch ein auf den Wellenlängenbereich abgestimmtes optisches Filter (32) zur Unterdrückung von Fremdlicht geführt wird, das dort (60a) im Empfangsstrahlengang angeordnet vor den übrigen Elementen der Empfangsoptik (30) ist, wo das remittierte Sendelicht (28) parallele Strahlenbündel bildet, und dass das Filter (32) einen schmalen Durchlassbereich nur für einen dem Bildfeldwinkel α entsprechenden nicht senkrechten Einfallswinkel des remittierten Sendelichts (28)aufweist.

**Claims**

**1.** An optoelectronic sensor (10) for detecting objects in a monitoring area (20), comprising a light transmitter (22) for transmitting transmitted light (26) of a wavelength range, a light receiver (34) for generating a received signal from the remitted transmitted light (28) remitted at the objects, receiving optics (30) that are arranged in front of the light receiver (34) and are optimized for an annular field of view with a field of view angle a, and a control and evaluation unit (42) configured to acquire information about the objects from the received signal, **characterized in that** the sensor (10) comprises an optical filter (32) for suppressing extraneous light that is tuned to the wavelength range and is arranged at a location (60a) in the received beam path where the remitted transmitted light (28) forms parallel beams, **in that** the filter (32) has a narrow passband only for a non-perpendicular angle of incidence of the remitted transmitted light (28) corresponding to the image field angle α, and **in that** the filter (32) is arranged in front of the remaining elements of the receiving optics (30).

**2.** The sensor (10) according to claim 1,

wherein the receiving optics (30) comprise a first lens (52) and a second lens (54), wherein the first lens (52) is formed in such a way that respective light beams of a single receiving point (34b) of the light receiver (34) with image field angle $\alpha$ only impinge on one half of the second lens (54).

3. The sensor (10) according to claim 2,
   wherein the inequality d $\geq$ (D1*f1)/(D1+2*f1*tan $\alpha$) is satisfied for the receiving optics (30), with focal length f1 and diameter D1 of the first lens (52) and distance d between the first lens (52) and the second lens (54).

4. The sensor according to claim 3,
   wherein it at least approximately holds that d = (D1*f1)/(D1+2*f1*tan $\alpha$).

5. The sensor (10) according to any of the preceding claims,
   wherein the receiving optics (30) do not comprise an additional optical element for parallelizing the beams of the remitted transmitted light (28) incident on the filter (32).

6. Sensor (10) according to any one of the preceding claims,
   wherein the light transmitter (22) is configured to transmit a plurality of light beams separated from one another, starting from a respective transmitting point, and the light receiver (34) is configured to generate respective received signals from the remitted light beams incident at a respective receiving point (34b).

7. The sensor (10) according to claim 6,
   wherein the transmitting points and/or the receiving points (34b) are arranged on a circular line (50).

8. The sensor (10) according to any of the preceding claims,
   that is configured as a laser scanner and has a movable deflection unit (12) that is used to periodically guide the transmitted light (26) through the monitoring region (20).

9. The sensor according to claim 8,
   wherein the deflection unit (12) is configured as a rotatable scanning unit accommodating the light transmitter (22) and/or the light receiver (34).

10. The sensor (10) according to any of the preceding claims,
    wherein the evaluation unit (42) is configured to determine a distance of the objects from a light time of flight between transmitting the transmitted light (26) and receiving the remitted transmitted light (28).

11. A method for detecting objects in a monitored area (20), wherein transmitted light (26) of a wavelength range is transmitted, a received signal is generated from the remitted transmitted light (26) remitted at the objects, and the received signal is evaluated in order to detect information about the objects, the remitted transmitted light (28) being guided through receiving optics (30) that are optimized for an annular image field with an image field angle a,
    **characterized in that** the remitted transmitted light (28) is guided through an optical filter (32) for suppressing extraneous light that is tuned to the wavelength range and is arranged at a location (60a) in the received beam path in front of the remaining elements of the receiving optics (30) where the remitted transmitted light (28) forms parallel beams, and **in that** the filter (32) has a narrow passband only for a non-perpendicular angle of incidence of the remitted transmitted light (28) corresponding to the image field angle a.

**Revendications**

1. Capteur optoélectronique (10) pour détecter des objets dans une zone à surveiller (20), comprenant un émetteur de lumière (22) pour émettre de la lumière d'émission (26) d'une plage de longueurs d'onde, un récepteur de lumière (34) pour générer un signal de réception à partir de la lumière d'émission (28) renvoyée par les objets, une optique de réception (30) disposée en amont du récepteur de lumière (34) et optimisée pour un champ d'image annulaire avec un angle de champ d'image a, et une unité de commande et d'évaluation (42) qui est réalisée pour saisir des informations sur les objets à partir du signal de réception,
   **caractérisé en ce que**
   le capteur (10) comprend un filtre optique (32) adapté à la plage de longueurs d'onde et destiné à supprimer de la lumière étrangère, qui est disposé dans le chemin optique de réception à l'endroit (60a) où la lumière d'émission renvoyée (28) forme des faisceaux de rayons parallèles, **en ce que** le filtre (32) présente une zone de passage étroite uniquement pour un angle d'incidence, non perpendiculaire et correspondant à l'angle de champ d'image a, de la lumière d'émission renvoyée (28), et **en ce que** le filtre (32) est disposé en avant des autres éléments de l'optique de réception (30).

2. Capteur (10) selon la revendication 1,
dans lequel l'optique de réception (30) présente une première lentille (52) et une deuxième lentille (54), la première lentille (52) étant réalisée de telle sorte que les faisceaux lumineux respectifs d'un point de réception individuel (34b) du récepteur de lumière (34) avec un angle de champ d'image $\alpha$ ne rencontrent chacun qu'une moitié de la deuxième lentille (54).

3. Capteur (10) selon la revendication 2,
dans lequel l'inégalité d $\geq$ (D1*f1)/(D1+2*f1*tan $\alpha$) est satisfaite pour l'optique de réception (30), avec la distance focale f1 et le diamètre D1 de la première lentille (52) et la distance d entre la première lentille (52) et la deuxième lentille (54).

4. Capteur (10) selon la revendication 3,
dans lequel s'applique au moins approximativement que

$$d = (D1*f1)/(D1+2*f1*tan \alpha).$$

5. Capteur (10) selon l'une des revendications précédentes,
dans lequel l'optique de réception (30) ne comprend pas d'élément optique supplémentaire pour paralléliser les faisceaux de rayons de la lumière d'émission renvoyée (28) arrivant sur le filtre (32).

6. Capteur (10) selon l'une des revendications précédentes,
dans lequel l'émetteur de lumière (22) est réalisé pour émettre plusieurs rayons lumineux séparés les uns des autres à partir d'un point d'émission respectif, et le récepteur de lumière (34) est réalisé pour générer des signaux de réception respectifs à partir des rayons lumineux renvoyés arrivant en un point de réception respectif (34b).

7. Capteur (10) selon la revendication 6,
dans lequel les points d'émission et/ou les points de réception (34b) sont disposés sur une ligne circulaire (50).

8. Capteur (10) selon l'une des revendications précédentes,
qui est réalisé sous forme de scanner laser et présente une unité de déviation mobile (12) à l'aide de laquelle la lumière d'émission (26) est guidée périodiquement à travers la zone à surveiller (20).

9. Capteur selon la revendication 8,
dans lequel l'unité de déviation (12) est réalisée sous la forme d'une unité de balayage rotative dans laquelle sont logés l'émetteur de lumière (22) et/ou le récepteur de lumière (34).

10. Capteur (10) selon l'une des revendications précédentes,
dans lequel l'unité d'évaluation (42) est réalisée pour déterminer une distance des objets à partir d'un temps de vol de lumière entre l'émission de la lumière d'émission (26) et la réception de la lumière d'émission renvoyée (28).

11. Procédé de détection d'objets dans une zone à surveiller (20), dans lequel une lumière d'émission (26) d'une plage de longueurs d'onde est émise, un signal de réception est généré à partir de la lumière d'émission (26) renvoyée par les objets, et le signal de réception est évalué afin de saisir des informations sur les objets, la lumière d'émission renvoyée (28) étant guidée à travers une optique de réception (30) qui est optimisée pour un champ d'image annulaire avec un angle de champ d'image $\alpha$, **caractérisé en ce que**
la lumière d'émission renvoyée (28) est guidée à travers un filtre optique (32) adapté à la plage de longueurs d'onde et destiné à supprimer de la lumière étrangère, qui est disposé dans le chemin optique de réception en avant des autres éléments de l'optique de réception (30) à l'endroit (60a) où la lumière d'émission renvoyée (28) forme des faisceaux de rayons parallèles, et **en ce que** le filtre (32) présente une zone de passage étroite uniquement pour un angle d'incidence, non perpendiculaire et correspondant à l'angle de champ d'image a, de la lumière d'émission renvoyée (28).

## Figur 1

## Figur 2a

## Figur 2b

## Figur 2c

## Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- US 20170289524 A1
- DE 102018118653
- DE 102018128630
- DE 102018125826
- DE 102018101846 A1
- US 20170323171 A1
- US 20060187470 A1